# EUROPEAN PATENT SPECIFICATION

(11) **EP 1 750 355 B1**
(45) Date of publication and mention of the grant of the patent: **12.06.2013**
(21) Application number: 06015375.6
(22) Date of filing: 24.07.2006
(51) Int. Cl.: H02K 15/04

(54) **Coil winding and discharge**
Spulenwickel- und Entladevorrichtung
Dispositif pour le bobinage et déchargement d'enroulement

(30) Priority: 02.08.2005 JP 2005223841
(43) Date of publication of application: 07.02.2007
(73) Proprietor: Nittoku Engineering Kabushiki Kaisha, Saitama-shi Saitama 336-8561 (JP)
(72) Inventor: Kuno, Hitoshi Nittoku Engineering K.K. Fukushima F, Date-gun Fukushima 960-1393 (JP); Ujiie, Yoshihiro Nittoku Engineering K.K, Iino-machi Date-gun Fukushima 960-1393 (JP)
(74) Representative: Grünecker, Kinkeldey, Stockmair & Schwanhäusser

(56) References cited:
- DE-A1- 2 309 837
- JP-A- 52 014 801
- US-A- 5 887 632

## Description

### FIELD OF THE INVENTION

This invention relates to the manufacture of a coil used in a stator for an electric motor, a power generator, and so on, and more particularly to the discharge of a coil wound around a spool from the spool.

### BACKGROUND OF THE INVENTION

With respect to a coil used in a stator for an electric motor or power generator, a method of forming the coil by winding a wire around a spool and then pushing the coil alone from the spool around blades projecting upward from a blade table is known. A plurality of blades are provided in an upright manner in a predetermined circle on the blade table, and when a coil has been discharged around all of the blades, the blade table is taken away and a new blade table is introduced, whereupon winding around the spool and coil discharge from the spool around the blades are repeated.

JP2000-245120A, published by the Japan Patent Office in 2000, proposes an inserter device which inserts a plurality of coils wrapped around a plurality of blades into slots formed axially on the inner periphery of a stator for an electric motor or power generator.

DE 2 309 837 describes a coil winding and discharge device which winds a wire around a spool to form a coil, and then drops the coil from the spool around a blade, the device comprising: a mechanism which inserts the blade from a central axis direction of the coil into a predetermined position of the spool around which the wire is wound; a mechanism which causes a pusher to abut against the coil on the spool in an opposite direction to an insertion direction of the blade; and a mechanism which withdraws the spool from the blade so that the coil is pushed from the spool toward a periphery of the blade by the pusher. The spool comprises first and second blocks, the second block having a stepped winding portion. The distance from the blade to the stepped winding portion increases toward the upper part of the spool. The pusher comprises a first pusher rail which pushes a part of the coil wound around the first block, and a second pusher rail which pushes a part of the coil wound around the second block. The first block comprises a first guide groove which guides the first pusher rail, and the second block comprises a second guide groove which guides the second pusher rail.

### SUMMARY OF THE INVENTION

When the wound coil is discharged from the spool toward the blade from the top of the blade, the coil may become loose such that the upper layer windings and lower layer windings intertwine. When the windings of the coil are intertwined, gaps occur between the intersecting wires, causing an increase in the apparent volume of the coil. Hence, when an intertwined coil is inserted into a slot of a stator core by the inserter device, the coil cannot be housed tidily in the slot, and as a result, the volume of the coil in relation to the core must be reduced. On the other hand, if an attempt is made to insert the coil into the slot forcibly, the wire may be damaged. Furthermore, when the coil is intertwined, irregularities occur in the length of the coil end which protrudes to the outside from the two ends of the slot, leading to an increase in the length of the coil end.

It is therefore an object of this invention to discharge a wound coil onto a blade in an aligned state.

In order to achieve the above object, this invention provides a coil winding and discharge device which winds a wire around a spool to form a coil, and then drops the coil from the spool around a blade. The device comprises the features defined in claim 1.

The details as well as other features and advantages of this invention are set forth in the remainder of the specification and are shown in the accompanying drawings.

### BRIEF DESCRIPTION OF THE DRAWINGS

FIG. 1 is a perspective view of a coil winding and discharge device according to this invention.

FIG. 2 is a perspective view of the main parts of a pusher and a spool provided in the coil winding and discharge device.

FIGs. 3A-3G are side views of the spool and pusher, including sectional views of a coil, illustrating a coil discharge process.

FIGs. 4A and 4B are a plan view and a side view of a discharged coil.

FIGs. 5A-5F are side views of a spool and a pusher, including sectional views of a coil, illustrating a coil discharge process performed by a coil winding and discharge device according to another embodiment of this invention.

FIGs. 6A and 6B are a plan view and a side view of a coil discharged by the coil winding and discharge device according to the other embodiment of this invention.

### DESCRIPTION OF THE PREFERRED EMBODIMENTS

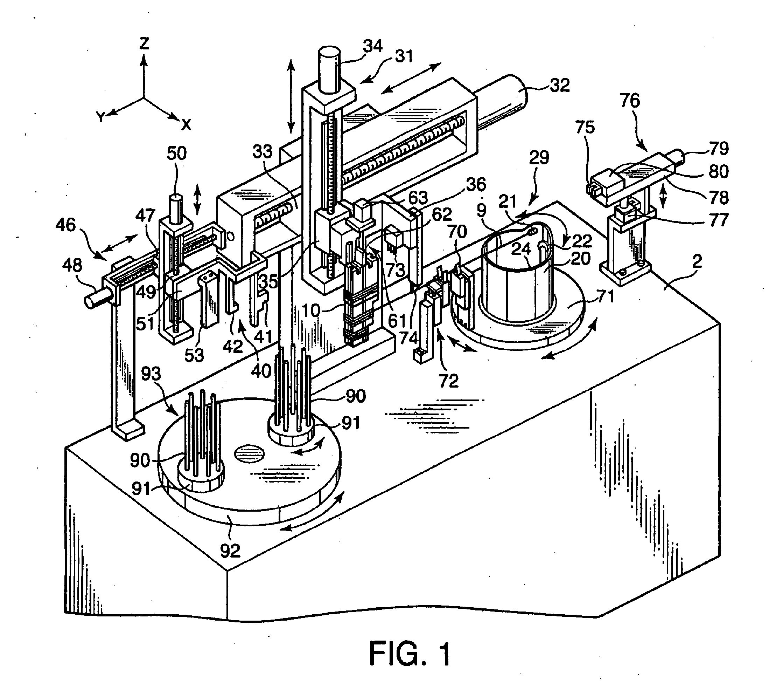

Referring to FIG. 1 of the drawings, a coil winding and discharge device comprises a spool moving mechanism 31, a pusher mechanism 46, a clamp mechanism 76, a flyer mechanism 29, a blade mechanism 93, and a cutter 72, all of which are disposed on a base 2.

The spool moving mechanism 31 moves a spool 10 between the flyer mechanism 29 and blade mechanism 93. The flyer mechanism 29 and clamp mechanism 76 wind a wire 9 around the outer periphery of the spool 10 after the spool 10 has been moved to the flyer mechanism 29. The cutter 72 cuts the wire 9 extending from the spool 10 following winding. The pusher mechanism 46 discharges a coil from the spool 10 after the spool 10 has been moved to the blade mechanism 93.

The structure and operation of each of the members required for this operation will now be described with reference to three axes X, Y, Z which intersect each other as shown in the figure. The X axis and Y axis correspond to a horizontal direction, and the Z axis corresponds to a vertical direction.

The flyer mechanism 29 comprises a cylindrical flyer 20 which is constituted to rotate about the Z axis on the base 2, and a rotating table 71 which rotates independently on the outside of the flyer 20. A nozzle 21 for supplying the wire 9 is fixed so as to face inward on the inner periphery of the flyer 20. The wire 9 is supplied to the nozzle 21 from a wire supply device, not shown in the figure, through a guide pipe 22. A mobile clamp 70 is fixed to the outer peripheral portion of the rotating table 71.

As shown in the figure, when the wire 9 fed from the nozzle 21 is gripped by the mobile clamp 70 and the rotating table 71 rotates on a plane defined by the X axis and Y axis, the wire 9 slides over an upper end 24 of the flyer 20. The upper end 24 of the flyer 20 is formed such that the height thereof varies smoothly in a circumferential direction so that the upper end 24 and the wire 9 can displace relative to each other smoothly at this time.

The spool moving mechanism 31 comprises a right-left moving table 33 which moves in the Y axis direction according to the operation of an actuator 32, and an elevating table 35 which moves relative to the right-left moving table 33 in the Z axis direction according to the operation of an actuator 34. The spool 10 is fixed to the elevating table 35. By driving the actuators 32 and 34, the spool 10 moves between a winding position corresponding substantially to the center of the flyer 20 and a coil discharge position on an index table 92.

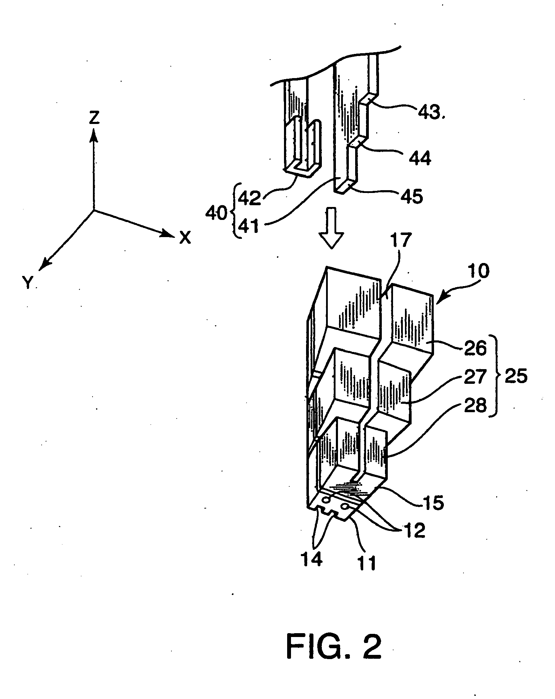

Next, referring to FIGs. 2A and 2B, the structure of the spool 10 will be described.

The spool 10 is divided into a first block 11 and a second block 15 relative to the Y axis direction. The first block 11 and second block 15 are biased in a direction approaching one another by a spring disposed on the inside. Two guide holes 12 are formed parallel to the Z axis direction in the first block 11. Further, two parallel first guide grooves 14 are formed in the Z axis direction in a side face of the first block 11 on the opposite side of the second block 15.

The cross-section of the second block 15 contracts from top to bottom at steps provided in two locations on a surface on the opposite side of the first block 11. By means of these steps, the second block 15 is divided into a large spool portion 26, a medium spool portion 27, and a small spool portion 28. The respective dimensions of the large spool portion 26, medium spool portion 27, and small spool portion 28 in the X axis direction increase gradually away from the first block 11. The rate of increase is the greatest in the large spool portion 26, medium in the medium spool portion 27, and the smallest in the small spool portion 28. A second guide groove 17 is formed in the second block 15 in the Z axis direction.

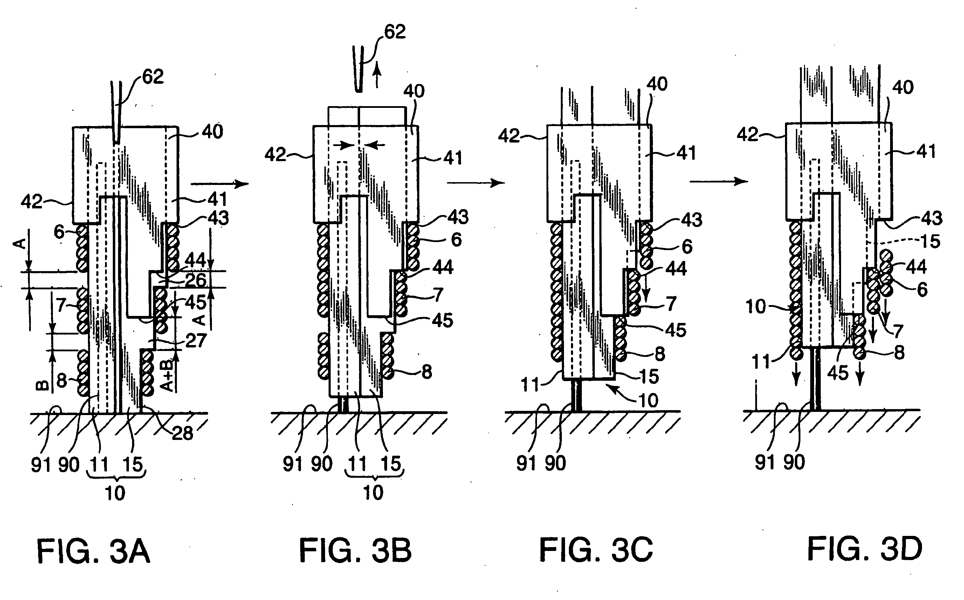

Referring to FIGs. 3A-3G, a large coil 6 is wound onto the large spool portion 26 and the corresponding portion of the first block 11. A medium coil 7 is wound onto the medium spool portion 27 and the corresponding portion of the first block 11. A small coil 8 is wound onto the small spool portion 28 and the corresponding portion of the first block 11. The coils 6-8 are wound in order from the large coil 6 to the small coil 8 using the same continuous wire 9.

Referring back to FIG. 1, the spool 10 and a wedge 62 are mounted on the elevating table 35 of the spool moving mechanism 31. The spool 10 is latched to the elevating table 35 such that the first block 11 and second block 15 are capable of relative displacement in the Y axis direction. The wedge 62 is inserted into the gap between the first block 11 and second block 15 at a varying depth according to the expansion and contraction of an air cylinder 63 mounted on the elevating table 35. When the wedge 62 is inserted deeply into the gap between the first block 11 and second block 15, the first block 11 and second block 15 are displaced against the spring in a separating direction such that the outer diameter of the spool 10 increases.

On the other hand, when the wedge 62 moves in a retreating direction from the first block 11 and second block 15 of the spool 10, or in other words moves upward along the Z axis, the first block 11 and second block 15 are biased by the spring in an approaching direction, and hence the outer diameter of the spool 10 decreases. In other words, the outer diameter of the spool 10 is varied by driving the air cylinder 63 to displace the wedge 62 upward and downward relative to the spool 10. Here, variation in the outer diameter of the spool 10 corresponds to variation in the outer diameter of all of the large spool portion 26, medium spool portion 27, and small spool portion 28.

The spring which biases the first block 11 and second block 15 in an approaching direction, the wedge 62, and the air cylinder 63 together constitute a widening/narrowing mechanism 61 for varying the diameter of the spool 10.

A winding start clamp 73 and a winding end clamp 74 are fixed to the elevating table 35 via a support member 36 in positions which are respectively slightly apart from the wedge 62 towards the flyer 20 in the Y axis direction.

The cutter 72 is disposed between the rotating table 71 and the index table 92, and cuts the wire 9 once the wire 9 has been wound onto the spool 10.

The clamp mechanism 76 is provided on an end of the base 2 corresponding to the opposite side of the rotating table 71 to the index table 92. The clamp mechanism 76 comprises an elevating table 78 which is displaced in the Z axis direction relative to the base 2 according to the operation of an air cylinder 77, a horizontally moving table 80 which is displaced in the Y axis direction relative to the elevating table 78 according to the operation of an actuator 79, and a pullout clamp 75 fixed to the horizontally moving table 80.

The blade mechanism 93 comprises two circular blade tables 91 supported on the index table 92, which is constituted to rotate about the Z axis on the base 2. The blade tables 91 are each constituted to rotate on a horizontal plane defined by the X axis and Y axis on the index table 92. The two blade tables 91 are disposed at equal distances from the center of the index table 92 at a 180-degree interval such that when the index table 92 gyrates 180 degrees, the two blade tables 91 switch positions.

A plurality of long, pin-shaped blades 90 are provided on the blade table 91 in an upwardly projecting manner at equal circumferential intervals. The interval between and dimensions of two adjacent blades 90 are set to allow the blades 90 to fit into the two guide holes 12 formed in the first block 11 of the spool 10.

The pusher mechanism 46 comprises a pusher 40. The pusher 40 is constituted by a first pusher rail 42 and a second pusher rail 41.

The pusher mechanism 46 comprises a horizontally moving table 47 which moves in the Y axis direction relative to the base 2 according to the operation of an actuator 48, an elevating table 49 which moves in the Z axis direction relative to the horizontally moving table 47 according to the operation of an actuator 50, a support member 51 which fixes the pusher 40 to the elevating table 49, and a gauge 53 which is fixed to the support member 51 adjacent to the pusher 40.

Referring to FIG. 2, the first pusher rail 42 is a channel-form member projecting downward along the Z axis from the support member 51, which engages with the first guide grooves 14 formed in the first block 11 when the spool 10 is set in a coil discharge position above the index table 92.

The second pusher rail 41 is a plate-form member projecting downward along the Z axis from the support member 51, which engages with the second guide groove 17 formed in the first block 15 when the spool 10 is in the state described above. The width of the second pusher rail 41 in the Y axis direction varies in accordance with the large spool portion 26, medium spool portion 27, and small spool portion 28 of the second block 15, and of the two steps formed as a result, the upper step constitutes a large pusher portion 43 and the lower step constitutes a medium pusher portion 44. The lower end of the second pusher rail 41 constitutes a small pusher portion 45.

Referring to FIGs. 3A-3G, the large pusher portion 43, medium pusher portion 44, and small pusher portion 45 abut respectively against the large coil 6, medium coil 7, and small coil 8, which are wound respectively around the large spool portion 26, medium spool portion 27, and small spool portion 28, from above. Further, as shown in FIG. 3A, assuming that a Z axis direction gap between the large coil 6 and medium coil 7 is A and a Z axis direction gap between the medium coil 7 and small coil 8 is B, the dimensions of the second pusher rail 41 are set in advance such that when the large pusher portion 43 abuts against the upper end of the large coil 6, the distance between the medium pusher portion 44 and medium coil 7 becomes B, and the distance between the small pusher portion 45 and small coil 8 becomes A+B.

The gauge 53 is a member which projects downward along the Z axis from the support member 51, and the interior thereof is formed with hole portions which are identical to the two guide holes 12 formed in the first block 11 of the spool 10. The gauge 53 is a member for checking whether or not the blades 90 are inclined or bent.

More specifically, before the coils 6-8 are discharged from the spool 10, the gauge 53 is moved above the blade table 91 and lowered such that the blades 90 to be used are inserted into the hole portions in the gauge 53. Once the blades 90 have been inserted up to a predetermined position in the hole portions, it is determined that the blades 90 are not inclined or bent. If, on the other hand, the blades 90 cannot be inserted up to the predetermined position in the hole portions, a predetermined fail-safe operation is performed.

The actuators 32, 34, 48, 50, 79 have an identical structure, being constituted by a ball screw which is driven to rotate by a servo motor and a follower which is screwed into the ball screw and moves parallel thereto.

The operations of the actuators 32, 34, 48, 50, 79, the flyer 20, the rotating table 71, the air cylinders 63, 77, the cutter 72, and the clamps 70, 73, 74, 75 are sequence-controlled by a controller.

By means of these control operations, the controller winds the wire 9 fed from the nozzle 21 around the spool 10 to form a coil, and drops the coil around pairs of the blades 90 in the following manner. First, a winding process is performed whereby the spool 10, which has been moved above the blades 90, is lowered such that a pair of the blades 90 are inserted into the two guide holes 12 in the spool 10. Next, a discharge process is performed, whereby the coils 6-8 are pushed downward from the spool 10 using the pusher 40 while the spool 10 is raised from the blades 90 such that the blades 90 are withdrawn from the spool 10. Thus the coils 6-8 discharged from the spool 10 are dropped around the pair of blades 90 in succession.

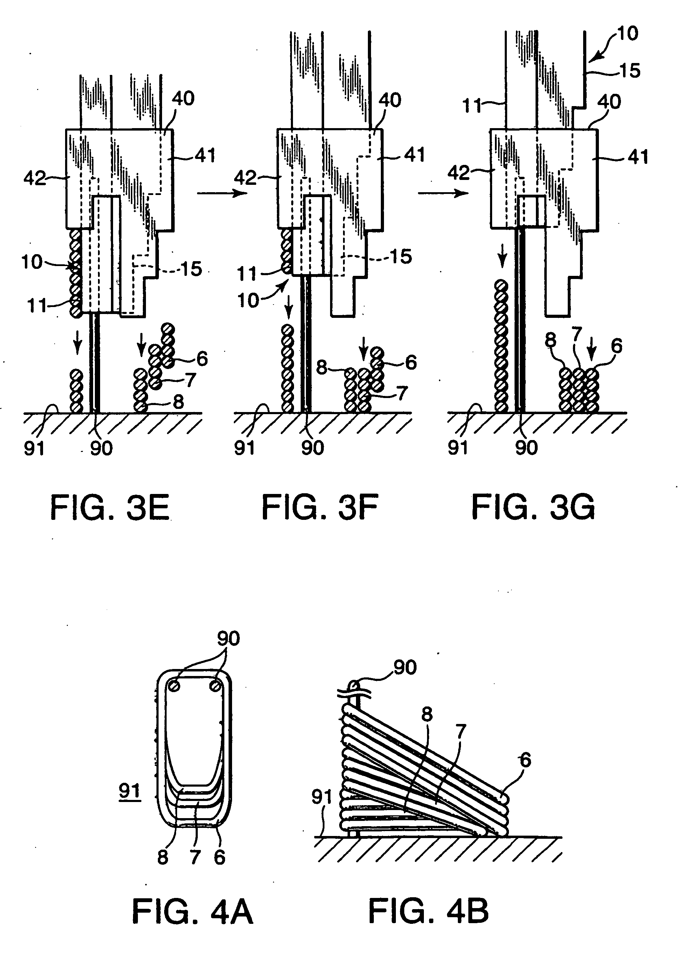

Referring to FIGs. 4A and 4B, the coils 6-8 discharged in this manner are deposited in an aligned state around each pair of blades 90 as shown in the figures. The coils 6-8 discharged around each pair of blades 90 in this manner are then inserted into a stator core by an inserter device, not shown in the figure, to form a stator or the like for an electric motor or power generator.

Next, an operation of the coil winding and discharge device will be described. (1)-(8) correspond to the winding process, and (9)-(13) correspond to the discharge process.

(1) With the tip end portion of the wire 9 that is fed from the nozzle 21 held by the mobile clamp 70, or in other words with the wire 9 traversing the flyer 20 as shown in FIG. 1, the spool moving mechanism 31 moves the spool 10 inside the flyer 20. Next, the flyer 20 and rotating table 71 are rotated 180 degrees and the wire 9 is transferred from the mobile clamp 70 to the pullout clamp 75. Next, the rotating table 71 is rotated 180 degrees to return the mobile clamp 70 to its original position in the vicinity of the cutter 72.

(2) The clamp mechanism 76 activates the electromagnetic actuator 79 to move the pullout clamp 75 in the Y axis direction away from the flyer 20. By means of this operation, the length of the wire 9 which is to serve as a winding start lead wire extending from the coil on the spool 10 can be adjusted arbitrarily. The clamp mechanism 76 then raises the pullout clamp 75 by causing the air cylinder 77 to expand, thereby ensuring that the wire 9 gripped by the pullout clamp 75 does not interfere with the rotating flyer 20 during the winding process.

(3) The spool 10 is lowered to a predetermined height position on the inside of the flyer 20 by the spool moving mechanism 31.

(4) The winding start clamp 73, which moves integrally with the spool 10, grips the wire 9 extending from the nozzle 21 to the pullout clamp 75 partway along the wire 9.

(5) The flyer 20 rotates and the spool moving mechanism 31 raises the spool 10, whereby the wire 9 fed from the rotating nozzle 21 is wound in alignment around the spool 10. The wedge 62 is inserted deeply between the first block 11 and second block 15 in advance, and thus the wire 9 is wound around the first block 11 and second block 15 with a wide gap existing between the first block 11 and second block 15. When winding the wire 9 around the spool 10, the wire 9 is gripped by both the winding start clamp 73 and the pullout clamp 75.

Once the wire 9 has been wound around the spool 10 several times, the pullout clamp 75 releases the wire 9. The controller controls the height of the spool 10, or in other words its position in the Z axis direction, such that the wire 9 is wound in alignment around the first block 11 and large spool portion 26, the first block 11 and medium spool portion 27, and the first block 11 and small spool portion 28, respectively. In so doing, the large coil 6, medium coil 7, and small coil 8 are formed respectively. As shown in FIG. 3A, the gap A is left between the large coil 6 and medium coil 7, and the gap B is left between the medium coil 7 and small coil 8.

(6) Once the wire 9 has been wound, the spool moving mechanism 31 moves the spool 10 toward the blade table 91. The spool 10 is stopped partway, and the winding end clamp 74, which moves together with the spool 10, grips the wire 9 extending from the nozzle 21 to the spool 10.

(7) The mobile clamp 70 grips the wire 9 extending between the winding end clamp 74 and the nozzle 21.

(8) The cutter 72 cuts the wire 9 between the winding end clamp 74 and the mobile clamp 70. The distance between the spool 10 and the winding end clamp 74 is fixed, but the controller varies the position in which the wire 9 is cut by controlling the stop position of the spool 10, and thus the length of the wire 9 which is to serve as the winding end lead wire of the coil on the spool 10 can be adjusted arbitrarily.

(9) During winding onto the spool 10 in the winding process, the pusher mechanism 46 fits the gauge 53 onto a pair of the blades 90 on the index table 92. The subject pair of blades 90 are the blades onto which the coil is to be discharged from the spool 10. The controller detects a load applied to the pusher mechanism 46 by this operation, and determines whether or not any irregularities exist in the pair of blades 90 from the magnitude of the load. When it is determined that no irregularities exist in the pair of blades 90, the controller performs the discharge process to drop the coil around the pair of blades 90 from the spool 10 according to the following procedure.

(10) The spool moving mechanism 31 lowers the spool 10 after moving the spool 10 above the blade table 91 such that the pair of blades 90 are inserted into the pair of guide holes 12 of the spool 10, as shown in FIG. 3A. Thus the spool 10 is caused to sit on the blade table 91.

(11) As shown in FIG. 3A, the pusher mechanism 46 inserts the pusher 40 into the spool 10. More specifically, the first pusher rail 42 and second pusher rail 41 are inserted into the pair of first guide grooves 14 and the second guide groove 17, respectively, from above. When the first pusher rail 42 is positioned so as to abut against the upper end portion of the large coil 6 and the large pusher portion 43 of the second pusher rail 41 is positioned so as to abut against the upper end portion of the large coil 6, the pusher 40 is stopped.

(12) As shown in FIG. 3B, the air cylinder 63 withdraws the wedge 62 from the gap between the first block 11 and second block 15. Thus, the first block 11 and second block 15 are caused to approach each other under the biasing force of the spring, whereby the diameter of the spool 10 contracts. By causing the diameter of the spool 10 to contract, the coil can be discharged from the spool 10 easily.

(13) The spool moving mechanism 31 raises the spool 10, and the pusher 40 drops the coil around the pair of blades 90 from the spool 10. This discharge operation will now be described in detail.

As shown in FIGs. 3A and 3B, when the spool 10 rises, the first pusher rail 42 and the large pusher portion 43 of the second pusher rail 41 move the large coil 6 downward by pushing the upper portion of the large coil 6 on the spool 10.

As shown in FIG. 3B, when the spool 10 rises further, with respect to the second block 15 the medium pusher portion 44 of the second pusher rail 41 moves the medium coil 7 wound around the medium spool portion 27 of the spool 10 downward relative to the medium spool portion 27 by pushing the upper portion of the medium coil 7. As a result, the lower portion of the large coil 6 begins to fall off the large spool portion 26. With respect to the first block 11, the first pusher rail 42 moves the large coil 6 and medium coil 7 downward by pushing the large coil 6 abutting against the medium coil 7 further downward.

As shown in FIG. 3C, when the spool 10 rises further, with respect to the second block 15 the small pusher portion 45 of the second pusher rail 41 moves the small coil 8 wound around the small spool portion 28 of the spool 10 downward relative to the small spool portion 28 by pushing the upper portion of the small coil 8. As a result, the large coil 6 falls off the large spool portion 26, and the lower portion of the medium coil 7 begins to fall downward from the medium spool portion 27. With respect to the first block 11, the large coil 6 and medium coil 7 move downward such that the large coil 6, medium coil 7, and small coil 8 are aligned with no gap therebetween, but all of the coils remain wound around the first block 11.

As shown in FIG. 3D, when the spool 10 rises further, with respect to the second block 15 the entire large coil 6 falls off the large spool portion 26, the majority of the medium coil 7 falls off the medium spool portion 27, and the lower end of the small coil 8 begins to fall off the small spool portion 28. With respect to the first block 11, the lower end of the small coil 8 begins to fall downward from the first block 11.

As shown in FIG. 3E, when the spool 10 rises further, the entire small coil 8 falls off the small spool portion 28 and the first block 11. A part of the large coil 6 and medium coil 7 remains wound around the first block 11.

As shown in FIG. 3F, when the spool 10 rises further, the entire medium coil 7 falls off the first block 11. A part of the large coil 6 remains wound around the first block 11.

As shown in FIG. 3G, when the spool 10 rises to a predetermined position, the entire large coil 6 falls off the first block 11, whereby the coil is separated completely from the spool 10 and deposited around the pair of blades 90.

(14) After withdrawing the spool 10 from the pair of blades 90, the spool moving mechanism 31 moves the spool 10 from the top of the blade table 91 into the flyer 20. Meanwhile, the blade table 91 is rotated by a predetermined angle so that the adjacent pair of the blades 90 move to a predetermined position for discharging the next coil.

By performing the operations of (1)-(14) repeatedly, coils are dropped around all of the sets of blades 90 on the blade table 91.

Referring to FIGs. 4A and 4B, in the coil deposited around the pair of blades 90, the small coil 8 is held substantially horizontally on the blade table 91, the medium coil 7 is slightly inclined so as to surround the small coil 8, and the large coil 6 is even more inclined so as to surround the medium coil 7. By supporting the small coil 8, medium coil 7, and large coil 6 on the pair of blades 90 and the blade table 91 in this manner, the coil is aligned in a fixed pattern around the pair of blades 90 without losing its shape.

When coils have been dropped around all of the sets of blades 90 on the blade table 91, the index table 92 is rotated 180 degrees, and the discharge process described above is performed in relation to the other blade table 91 provided on the index table 92. Meanwhile, the blade table 91 around which coils have been dropped is removed from the index table 92 and transported to an inserter device not shown in the figure. The inserter device assembles a stator coil by inserting the coils a stator core of an electric motor or power generator.

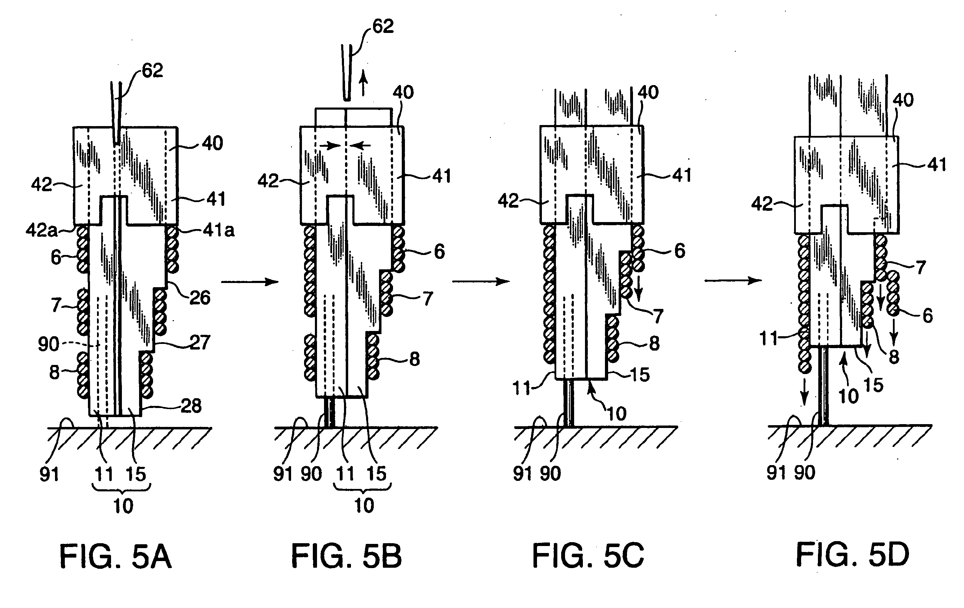

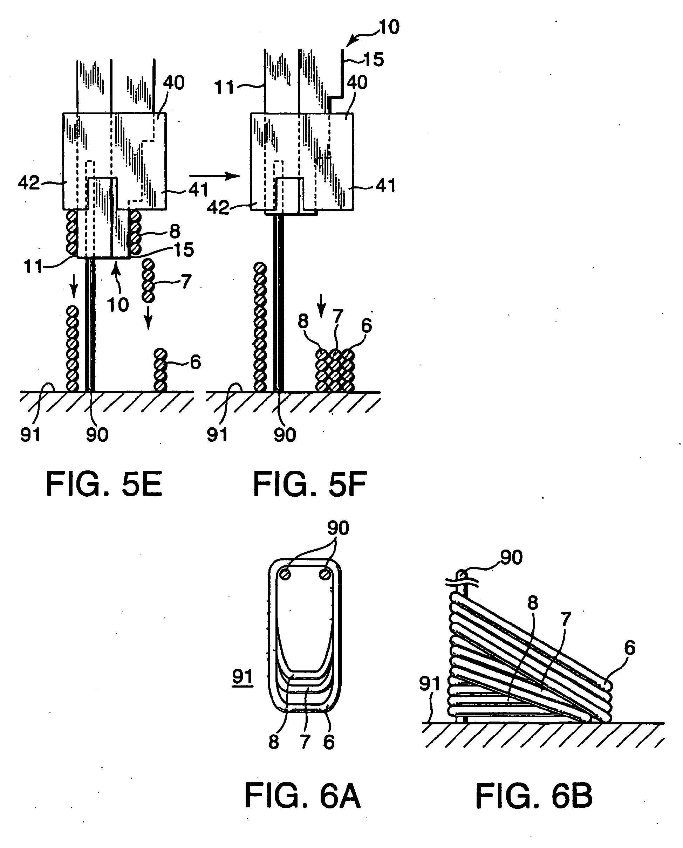

Next, referring to FIGs. 5A-5F and FIGs. 6A and 6B, another embodiment of this invention, which relates to the constitution of the pusher 40, will be described.

Referring to FIGs. 5A-5F, in this embodiment the pusher 40 is formed such that a lower end 42a of the first pusher rail 42 inserted into the pair of first guide grooves 14 and a lower end 41a of the second pusher rail 41 inserted into the second guide groove 17 have a substantially identical height.

The process for discharging a coil from the spool 10 using the pusher 40 is performed in the following manner.

As shown in FIG. 5A, when the spool 10 rises, the first pusher rail 42 and second pusher rail 41 abut against the upper end of the large coil 6 on the spool 10.

As shown in FIG. 5B, when the spool 10 rises further, the large coil 6 pushes the upper end of the medium coil 7 such that the medium coil 7 moves downward.

As shown in FIG. 5C, when the spool 10 rises further, the medium coil 7 pushes the upper end of the small coil 8 such that the small coil 8 moves downward. Meanwhile, a part of the large coil 6 begins to fall off the large spool portion 26. The large coil 6, medium coil 7, and small coil 8 remain wound around the first block 11.

As shown in FIG. 5D, when the spool 10 rises further, the entire large coil 6 falls off the large spool portion 26 and a part of the medium coil 7 begins to fall off the medium spool portion 27. With respect to the first block 11, the small coil 8 begins to fall off the first block 11.

As shown in FIG. 5E, when the spool 10 rises further, both the large coil 6 and the medium coil 7 fall, and only the small coil 8 remains wound.

As shown in FIG. 5F, when the spool 10 rises to a predetermined position, the entire small coil 8, medium coil 7, and large coil 6 fall off the spool 10 around the pair of blades 90.

Referring to FIGs. 6A and 6B, in the coil collected around the pair of blades 90, the small coil 8 is held substantially horizontally on the blade table 91, the medium coil 7 is slightly inclined so as to surround the small coil 8, and the large coil 6 is even more inclined so as to surround the medium coil 7. By supporting the small coil 8, medium coil 7, and large coil 6 on the pair of blades 90 and the blade table 91 in this manner, the coil is aligned in a fixed pattern around the pair of blades 90 without losing its shape.

As illustrated in each of the embodiments described above, with the coil winding and discharge device, the pusher 40 pushes the coil from the spool 10 in a withdrawing process for withdrawing the spool 10 from the blades 90 so that the coil is deposited around a pair of the blades 90 in a predetermined pattern. Hence, the inserter device is able to insert the coil into a stator core with the coil arranged in the predetermined pattern, and as a result, the sectional area of the coil relative to the stator core can be raised.

Further, each coil is arranged in a uniform pattern with no irregularities, and hence the coil end can be reduced in length. As a result, the performance of the stator can be enhanced and the stator can be made compact.

The coil winding and dropping method and device according to this invention exhibits particularly favorable effects when applied to a process for manufacturing a multipolar armature such as a stator or rotor.

Although the invention has been described above by reference to certain embodiments of the invention, the invention is not limited to the embodiments described above. Modifications and variations of the embodiments described above will occur to those skilled in the art, within the scope of the claims.

For example, in the embodiments described above, the coil is wound around the three stepped winding portions 26-28 with different winding diameters. This invention can however be applied to a spool having any number of stepped winding portions.

In the embodiments described above, a set of coils is dropped around a pair of the blades 90, but a set of coils may be dropped around a single blade.

In the embodiments described above, the first block 11 and first guide grooves 14 are formed vertically parallel to the blades 90. However, the blades 90, first block 11, and first guide grooves 14 may be formed parallel and at an inclined angle.

In the embodiments described above, the pusher 40 is provided on the base 2, but the pusher 40 may be disposed on the elevating table 35 of the spool moving mechanism 31. In this case, a mechanism which moves the pusher 40 relative to the spool 10 is provided.

In the embodiments described above, the gauge 53 is provided in series with the pusher 40 and attached to the support member 51, but a moving mechanism for the gauge 53 may be provided on the base 2 independently of the pusher mechanism 46.

In the embodiments described above, the guide holes 12 are formed in the spool 10 for inserting the blades 90, but the spool 10 may be hollow or formed in the shape of a frame.

In the embodiments described above, the nozzle 21 revolves around the spool 10 to wind the wire 9 around the spool 10, but winding may be performed by providing the nozzle 21 in a fixed position and rotating the spool 10 around the nozzle 21.

The embodiments of this invention in which an exclusive property or privilege is claimed are defined as follows:

## Claims

1. A coil winding and discharge device which winds a wire (9) around a spool (10) to form a coil (6-8), and then drops the coil (6-8) from the spool (10) around a blade (90), comprising:
a mechanism (34, 35) which inserts the blade (90) from a central axis direction of the coil (6-8) into a predetermined position of the spool (10) around which the wire (9) is wound;
a mechanism (46) which causes a pusher (40) to abut against the coil (6-8) on the spool (10) in an opposite direction to an insertion direction of the blade (90); and
a mechanism (34, 35) which withdraws the spool (10) from the blade (90) so that the coil (6-8) is pushed from the spool (10) toward a periphery of the blade (90) by the pusher (40),
wherein the spool (10) comprises a first block (11) having a winding portion with a fixed distance from the blade (90), and parallel with respect to the central axis of the spool a second block (15) having a surface opposite to the first block (26-28) with a distance from the blade (90) which contracts in a stepped fashion from top to bottom, the coil (6-8) being wound continuously around the first block (11) and the second block (15),
wherein the distance from the blade (90) to the stepped winding portion (26-28) increases toward the upper part of the spool (10),
wherein the pusher (40) comprises a first pusher rail (42) which pushes a part of the coil (6-8) wound around the first block (11), and a second pusher rail (41) which pushes a part of the coil (6-8) wound around the second block (15), the first block (11) comprises a first guide groove (14) which guides the first pusher rail (42), and the second block (15) comprises a second guide groove (17) which guides the second pusher rail (41),
**characterized in that** the second pusher rail (41) comprises a pushing portion (41a, 43-45) which pushes the coil (6-8) wound around the stepped winding portion (26-28) at different winding diameters such that a coil (6) having a largest winding diameter is caused to fall off the stepped winding portion before coils (7, 8) having other winding diameters, and a coil (8) having a smallest winding diameter is caused to fall off the stepped winding portion after the coils (6, 7) having the other winding diameters.

2. The coil winding and discharge device as defined in Claim 1, wherein the pushing portion (43-45) is formed in a stepped form.

3. The coil winding and discharge device as defined in Claim 1 or Claim 2, wherein the pushing portion (41 a) comprises a continuous plane forming a right angle with a pushing direction.

4. The coil winding and discharge device as defined in any one of Claim 1 through Claim 3, wherein the blade (90) comprises parallel pin-shaped members, and the spool (10) comprises a guide hole (12) into which the blade (90) is inserted.

5. The coil winding and discharge device as defined in any one of Claim 1 through Claim 4, further comprising a blade (90) table having a plurality of the blades (90) disposed on a circumference thereof, the blade (90) table being constituted to be capable of rotary displacement so that the coil (6-8) can be dropped sequentially around each blade (90) in the same position.

6. The coil winding and discharge device as defined in any one of Claim 1 through Claim 5, further comprising a gauge (53) which detects an irregularity in the blade (90).

7. The coil winding and discharge device as defined in any one of Claim 1 through Claim 6, further comprising a clamp mechanism (76) which grips an end portion of the wire (9) when the wire (9) is wound around the spool (10), the clamp mechanism (76) comprising a mechanism (79, 80) which varies a gripping position of the end portion of the wire (9) in relation to the spool (10) in the wire (9) winding position in order to adjust a length of a lead wire of the wire (9) at the start of winding around the spool (10).

8. The coil winding and discharge device as defined in any one of Claim 1 through Claim 7. further comprising:
a flyer mechanism (29) which winds the wire (9) around the spool (10) while revolving around the spool (10);
a winding end clamp (74) which moves integrally with the spool (10) and which grips the wire (9) between the flyer mechanism (29) and the spool (10) once the wire (9) has been wound;
a spool moving mechanism (31) which moves the spool (10) between the flyer mechanism (29) and the blade (90); and
a cutter (72) which cuts the wire (9) between the winding end clamp (74) and the flyer mechanism (76) once the wire (9) has been wound, wherein a length of a lead wire of the wire (9) at the end of winding around the spool (10) is adjusted in accordance with the position to which the spool (10) has been moved by the spool moving mechanism (31) when the wire (9) is cut.

## Patentansprüche

1. Spulenwickel- und Ausgabevorrichtung, die einen Draht (9) um einen Spulenkern (10) wickelt, um eine Spule (6-8) auszubilden, und anschließend die Spule (6-8) von dem Spulenkern (10) um ein Schwert (90) fallenlässt, umfassend:
einen Mechanismus (34, 35), der das Schwert (90) aus einer Mittelachsenrichtung der Spule (6-8) in eine vorbestimmte Position des Spulenkerns (10) einfügt, um den der Draht (9) gewickelt ist;
einen Mechanismus (46), der bewirkt, dass ein Schieber (40) mit der Spule (6-8) auf dem Spulenkern (10) in einer entgegengesetzten Richtung zu einer Einfügerichtung des Schwertes (90) in Anlage gelangt; und
einen Mechanismus (34, 35), der den Spulenkern (10) von dem Schwert (90) derart zurückzieht, dass die Spule (6-8) von dem Spulenkern (10) zu einem Rand des Schwertes (90) durch den Schieber (40) geschoben wird,
wobei der Spulenkern (10) einen ersten Block (11), der einen Wickelabschnitt mit einem unveränderlichen Abstand von dem Schwert (90) hat, und parallel in Bezug auf die Mittelachse des Spulenkerns einen zweiten Block (15) umfasst, der eine Oberfläche hat, die dem ersten Block mit einem Abstand von dem Schwert (90) gegenüberliegt und sich abgestuft von oben nach unten verjüngt, wobei die Spule (6-8) kontinuierlich um den ersten Block (11) und den zweiten Block (15) gewickelt wird,
der Abstand von dem Schwert (90) zu dem abgestuften Wickelabschnitt (26-28) hin zu dem oberen Teil des Spulekerns (10) zunimmt,
und der Schieber (40) eine erste Schieberschiene (42), die einen Teil der Spule (6-8) schiebt, die um den ersten Block (11) gewickelt ist, und eine zweite Schieberschiene (41) umfasst, die einen Teil der Spule (6-8) schiebt, die um den zweiten Block (15) gewickelt ist, wobei der erste Block (11) eine erste Führungsrille (14), die die erste Schieberschiene (42) führt, und der zweite Block (15) eine zweite Führungsrille (17) umfasst, die die zweite Schieberschiene (41) führt,
**dadurch gekennzeichnet, dass** die zweite Schieberschiene (41) einen Schiebeabschnitt (41 a, 43-45) umfasst, der die Spule (6-8), die um den gestuften Wickelabschnitt (26-28) mit unterschiedlichen Wickeldurchmessern gewickelt ist, derart schiebt, dass eine Spule (6), die einen größten Wickeldurchmesser hat, veranlasst wird, vor den Spulen (7, 8), die andere Wickeldurchmesser haben, von den gestuften Wickelabschnitten zu fallen, und eine Spule (8), die einen kleinsten Wickeldurchmesser hat, veranlasst wird, nach den Spulen (6, 7), die andere Wickeldurchmesser haben, von dem gestuften Wickelabschnitt zu fallen.

2. Spulenwickel- und Ausgabevorrichtung nach Anspruch 1, bei der der Schiebeabschnitt (43-45) in gestufter Gestalt ausgebildet ist.

3. Spulenwickel- und Ausgabevorrichtung nach Anspruch 1 oder 2, bei der der Schiebeabschnitt (41a) eine kontinuierliche Ebene umfasst, die einen rechten Winkel zu einer Schieberichtung bildet.

4. Spulenwickel- und Ausgabevorrichtung nach einem der Ansprüche 1 bis 3, bei der das Schwert (90) parallele stiftförmige Elemente umfasst und der Spulenkern (10) ein Führungsloch (12) umfasst, in das das Schwert (90) eingeführt wird.

5. Spulenwickel- und Ausgabevorrichtung nach einem der Ansprüche 1 bis 4, weiterhin umfassend einen Tisch für die Schwerter (90), der eine Vielzahl der Schwerter (90) umfasst, die an einem Umfang desselben angeordnet sind, wobei der Tisch für die Schwerter (90) derart eingerichtet ist, dass er drehend verschoben werden kann, so dass die Spule (6-8) nacheinander um jedes Schwert (90) in derselben Stellung fallengelassen werden kann.

6. Spulenwickel- und Ausgabevorrichtung nach einem der Ansprüche 1 bis 5, weiterhin umfassend eine Messlehre (53), die eine Unregelmäßigkeit in dem Schwert (90) erfasst.

7. Spulenwickel- und Ausgabevorrichtung nach einem der Ansprüche 1 bis 6, weiterhin umfassend einen Klemmenmechanismus (76), der einen Endabschnitt des Drahtes (9) greift, wenn der Draht (9) um den Spulenkern (10) gewickelt wird, wobei der Klemmenmechanismus (76) einen Mechanismus (79, 80) umfasst, der eine Greifposition des Endabschnittes des Drahtes (9) in Bezug auf den Spulenkern (10) in der Wickelstellung des Drahtes (9) ändert, um eine Länge eines Anschlussdrahtes des Drahtes (9) zu Beginn des Wickelns um die Spule (10) einzustellen.

8. Spulenwickel- und Ausgabevorrichtung nach einem der Ansprüche 1 bis 7, weiterhin umfassend:
einen Flyer-Mechanismus (28), der den Draht (9) um den Spulenkern (10) wickelt, während er sich um den Spulenkern (10) dreht;
eine Wicklungsendenklemme (74), die sich integral mit dem Spulenkern (10) bewegt und den Draht (9) zwischen dem Flyer-Mechanismus (29) und dem Spulenkern (10) greift, sobald der Draht (9) gewickelt wurde;
einen Spulenkern-Bewegungsmechanismus (31), der den Spulenkern (10) zwischen dem Flyer-Mechanismus (29) und dem Schwert (90) bewegt; und
eine Schneideinrichtung (72), die den Draht (9) zwischen der Wicklungsendenklemme (74) und dem Flyer-Mechanismus (76) schneidet, sobald der Draht (9) gewickelt wurde, wobei eine Länge eines Anschlussdrahtes des Drahtes (9) am Ende der Wicklung um die Spule (10) in Übereinstimmung mit der Position eingestellt wird, in die der Spulenkern (10) von dem Spulenkern-Bewegungsmechanismus (31) bewegt wurde, wenn der Draht (9) geschnitten wird.

## Revendications

1. Dispositif de bobinage d'enroulement et d'éjection qui bobine un fil (9) autour d'une bobine (10) afin de former un enroulement (6 à 8) autour d'une lame (90) à partir de la bobine (10), comprenant :
un mécanisme (34, 35) qui insère la lame (90) depuis la direction de l'axe central de l'enroulement (6 à 8) dans une position prédéterminée de la bobine (10) autour de laquelle est bobiné le fil (9),
un mécanisme (46) qui amène un dispositif de poussée (40) à venir en butée contre l'enroulement (6 à 8) sur la bobine (10) dans une direction opposée à la direction d'insertion de la lame (90), et
un mécanisme (34, 35) qui retire la bobine (10) de la lame (90) de telle sorte que l'enroulement (6 à 8) soit poussé à partir de la bobine (10) vers la périphérie de la lame (90) par le dispositif de poussée (40),
dans lequel la bobine (10) comprend un premier bloc (11) comportant une partie formant fenêtre en présentant une distance fixe à partir de la lame (90) et un second bloc (15) parallèle par rapport à l'axe central de la bobine, comportant une surface opposée au premier bloc (26 à 28) en présentant une distance à partir de la lame (90) qui diminue à la manière d'un escalier depuis le sommet jusqu'à la partie basse, l'enroulement (6 à 8) étant
bobiné de manière continue autour du premier bloc (11) et du second bloc (15),
dans lequel la distance depuis la lame (90) jusqu'à la partie d'enroulement en forme de marches (26 à 28) augmente vers la partie supérieure de la bobine (10),
dans lequel le dispositif de poussée (40) comprend un premier rail de poussée (42) qui pousse une partie de l'enroulement (6 à 8) bobinée autour du premier bloc (11), ainsi qu'un second rail de poussée (41) qui pousse une partie de l'enroulement (6 à 8) bobinée autour du second bloc (15), le premier bloc (11) comprenant une première rainure de guidage (14) qui guide le premier rail de poussée (42), et le second bloc (15) comprenant une seconde réunion de guidage (17) qui guide le second rail de poussée (41),
**caractérisé en ce que** le second rail de poussée (41) comprend une partie destinée à exercer une poussée (41a, 43 à 45) qui pousse l'enroulement (6 à 8) bobiné autour de la partie d'enroulement en forme de marches (26 à 28) à différents diamètres de bobinage de telle sorte que l'enroulement (6) présentant le diamètre de bobinage le plus grand soit amené à tomber de la partie de bobinage en forme de marches avant des enroulements (7, 8) présentant d'autres diamètres de bobinage, et que l'enroulement (8) présentant le diamètre de bobinage le plus petit soit amené à tomber de la partie de bobinage en forme de marches après les enroulements (6, 7) présentant les autres diamètres de bobinage.

2. Dispositif de bobinage d'enroulement et d'éjection selon la revendication 1, dans lequel la partie (43 à 45) est façonnée selon la forme d'un escalier.

3. Dispositif de bobinage d'enroulement et d'éjection selon la revendication 1 ou la revendication 2, dans lequel la partie destinée à exercer une poussée (41a) comprend un plan continu formant un angle droit avec une direction de poussée.

4. Dispositif de bobinage d'enroulement et d'éjection selon l'une quelconque des revendications 1 à 3, dans lequel la lame (90) comprend des éléments parallèles en forme de broches et la bobine (10) comprend un alésage de guidage (12) dans lequel est insérée la lame (90).

5. Dispositif de bobinage d'enroulement et d'éjection selon l'une quelconque des revendications 1 à 4, comprenant en outre une table de lames (90) comportant une pluralité de lames (90) disposées sur la circonférence de celle-ci, la table de lames (90) étant constituée pour pouvoir se déplacer par rotation de telle sorte que l'enroulement (6 à 8) puisse être déposé séquentiellement autour de chaque lame (90) dans la même position.

6. Dispositif de bobinage d'enroulement et d'éjection selon l'une quelconque des revendications 1 à 5, comprenant en outre un gabarit (53) qui détecte un défaut dans la lame (90).

7. Dispositif de bobinage d'enroulement et d'éjection selon l'une quelconque des revendications 1 à 6, comprenant en outre un mécanisme de serrage (76) qui saisit une extrémité du fil (9) lorsque le fil (9) est bobiné autour de la bobine (10), le mécanisme de serrage (76) comprenant un mécanisme (79, 80) qui fait varier la position de saisie de l'extrémité du fil (9) par rapport à la bobine (10) dans la position de bobinage du fil (9) afin d'ajuster la longueur du fil de sortie du fil (9) au début du bobinage autour de la bobine (10).

8. Dispositif de bobinage d'enroulement et d'éjection selon l'une quelconque des revendications 1 à 7, comprenant en outre :
un mécanisme de banc à broches (29) qui bobine le fil (9) autour de la bobine (10) tout en tournant autour de la bobine (10),
un dispositif de serrage de fin d'enroulement (74) qui se déplace de manière solidaire avec la bobine (10) et qui saisit le fil (9) entre le mécanisme de banc à broches (29) et la bobine (10) une fois que le fil (9) a été bobiné,
un mécanisme de déplacement de bobine (31) qui déplace la bobine (10) entre le mécanisme de banc à broches (29) et la lame (90), et
un dispositif de découpe (72) qui coupe le fil (9) entre le dispositif de serrage de fin d'enroulement (74) et le mécanisme de banc à broches (76) une fois que le fil (9) a été coupé, la longueur du fil de sortie du fil (9) à l'extrémité du bobinage autour de la bobine (10) étant ajustée en fonction de la position à laquelle a été déplacée la bobine (10) par le mécanisme de déplacement de bobine (31) lorsque que le fil (9) est coupé.
